(19) Europäisches Patentamt
European Patent Office
Office européen des brevets

(11) **EP 4 368 022 A1**

(12) **EUROPEAN PATENT APPLICATION**
published in accordance with Art. 153(4) EPC

(43) Date of publication:
**15.05.2024 Bulletin 2024/20**

(21) Application number: **22837556.4**

(22) Date of filing: **29.06.2022**

(51) International Patent Classification (IPC):
*A01N 37/46* (2006.01)  *A01P 7/04* (2006.01)
*A01N 53/04* (2006.01)  *A01N 53/08* (2006.01)
*A01N 43/56* (2006.01)

(52) Cooperative Patent Classification (CPC):
**A01N 37/46; A01N 43/56; A01N 53/00; A01P 7/04**

(86) International application number:
**PCT/JP2022/025945**

(87) International publication number:
**WO 2023/282140 (12.01.2023 Gazette 2023/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.07.2021  JP 2021112317**

(71) Applicant: **SUMITOMO Chemical Company, Limited
Tokyo 103-6020 (JP)**

(72) Inventor: **NAMBA, Yusuke
Takarazuka-shi, Hyogo 665-8555 (JP)**

(74) Representative: **Vossius & Partner
Patentanwälte Rechtsanwälte mbB
Siebertstrasse 3
81675 München (DE)**

(54) **PEST CONTROL COMPOSITION AND PEST CONTROL METHOD**

(57)    The present invention provides a composition having excellent control activity against pests, and a pest control method, and the composition comprises at least one or more pest control compounds selected from Group (A), at least one or more pest control compounds selected from Group (B) and at least one or more pest control compounds selected from Group (C) in a weight ratio of 1:1000:1000 to 1:0.001:0.001, and Group (A), Group (B) and Group (C) are respectively as follows:
Group (A): Group consisting of broflanilide, nicofluprole, fluxametamide and isocycloseram;
Group (B): Group consisting of imiprothrin and tetramethrin; and
Group (C): Group consisting of permethrin, cypermethrin, phenothrin, cyphenothrin, cyfluthrin, deltamethrin and cyhalothrin.

**EP 4 368 022 A1**

**Description**

[Technical Field]

The present invention relates to a pest control composition and a pest control method.

[Background Art]

Many compounds have hitherto been known as active ingredients of pest control compositions (see, for example, Non-Patent Document 1).

[Prior Art Document]

[Non-Patent Document]

[Non-Patent Document 1] The Pesticide Manual-18th Edition (published by BCPC); ISBN 978-1-9998966-1-4

[Disclosure of the Invention]

[Problems to be Solved by the Invention]

An object of the present invention is to provide a composition having excellent control activity against pests, and a pest control method.

[Means for Solving the Problems]

The present invention is an invention according to the following pest control composition and pest control method.

[1] A pest control composition comprising at least one or more pest control compounds selected from Group (A), at least one or more pest control compounds selected from Group (B) and at least one or more pest control compounds selected from Group (C) in a weight ratio of 1:1000:1000 to 1:0.001:0.001:

> Group (A): Group consisting of broflanilide, nicofluprole, fluxametamide and isocycloseram;
> Group (B): Group consisting of imiprothrin and tetramethrin; and
> Group (C): Group consisting of permethrin, cypermethrin, phenothrin, cyphenothrin, cyfluthrin, deltamethrin and cyhalothrin.

[2] A method for controlling pests, which comprises applying the effective amount of the pest control composition according to [1] to pests, or a habitat thereof, or a place where the appearance thereof is expected.

[Effects of the Invention]

The pest control composition of the present invention exhibits excellent pest control activity.

[Mode for Carrying Out the Invention]

A description will be made of the pest control composition of the present invention (hereinafter referred to as inventive composition), and active ingredients thereof, namely, at least one or more pest control compounds selected from Group (A) (hereinafter referred to as present compound A), at least one or more pest control compounds selected from Group (B) (hereinafter referred to as present compound B) and at least one or more pest control compounds selected from Group (C) (hereinafter referred to as present compound C).
The present compound A, the present compound B and present compound C are all known compounds and are mentioned, for example, in "The Pesticide Manual-18th Edition (published by BCPC); ISBN 978-1-9998966-1-4" or "WO2015/067646". These compounds are obtained by producing using a known method. One or more stereoisomers may exist in the present compound A, the present compound B and the present compound C. Examples of the stereoisomers include enantiomers, diastereomers and geometric isomers. The present compound A, the present compound B and the present compound C include each stereoisomer, and a mixture of stereoisomers in an arbitrary ratio.
Examples of the aspect of the inventive composition include the following compositions.

[Aspect 1] A composition in which the weight ratio of the present compound A, the present compound B and the present compound C is in a range of 1:1000:1000 to 1:0.001:0.001.

[Aspect 2] A composition in which the weight ratio of the present compound A, the present compound B and the present compound C is in a range of 1:100:100 to 1:0.01:0.01.

[Aspect 3] A composition in which the weight ratio of the present compound A, the present compound B and the present compound C is in a range of 1:10:10 to 1:0.1:0.1.

[Aspect 4] A composition in which the weight ratio of broflanilide, imiprothrin and permethrin is in a range of 1:1000:1000 to 1:0.001:0.001.

[Aspect 5] A composition in which the weight ratio of broflanilide, imiprothrin and cypermethrin is in a range of 1:1000:1000 to 1:0.001:0.001.

[Aspect 6] A composition in which the weight ratio of broflanilide, imiprothrin and phenothrin is in a range of 1:1000:1000 to 1:0.001:0.001.

[Aspect 7] A composition in which the weight ratio of broflanilide, imiprothrin and cyphenothrin is in a range of 1:1000:1000 to 1:0.001:0.001.

[Aspect 8] A composition in which the weight ratio of broflanilide, imiprothrin and cyfluthrin is in a range of 1:1000:1000 to 1:0.001:0.001.

[Aspect 9] A composition in which the weight ratio of broflanilide, imiprothrin and deltamethrin is in a range of 1:1000:1000 to 1:0.001:0.001.

[Aspect 10] A composition in which the weight ratio of broflanilide, imiprothrin and cyhalothrin is in a range of 1:1000:1000 to 1:0.001:0.001.

[Aspect 11] A composition in which the weight ratio of broflanilide, tetramethrin and permethrin is in a range of 1:1000:1000 to 1:0.001:0.001.

[Aspect 12] A composition in which the weight ratio of broflanilide, tetramethrin and cypermethrin is in a range of 1:1000:1000 to 1:0.001:0.001.

[Aspect 13] A composition in which the weight ratio of broflanilide, tetramethrin and phenothrin is in a range of 1:1000:1000 to 1:0.001:0.001.

[Aspect 14] A composition in which the weight ratio of broflanilide, tetramethrin and cyphenothrin is in a range of 1:1000:1000 to 1:0.001:0.001.

[Aspect 15] A composition in which the weight ratio of broflanilide, tetramethrin and cyfluthrin is in a range of 1:1000:1000 to 1:0.001:0.001.

[Aspect 16] A composition in which the weight ratio of broflanilide, tetramethrin and deltamethrin is in a range of 1:1000:1000 to 1:0.001:0.001.

[Aspect 17] A composition in which the weight ratio of broflanilide, tetramethrin and cyhalothrin is in a range of 1:1000:1000 to 1:0.001:0.001.

[Aspect 18] A composition in which the weight ratio of nicofluprole, imiprothrin and permethrin is in a range of 1:1000:1000 to 1:0.001:0.001.

[Aspect 19] A composition in which the weight ratio of nicofluprole, imiprothrin and cypermethrin is in a range of 1:1000:1000 to 1:0.001:0.001.

[Aspect 20] A composition in which the weight ratio of nicofluprole, imiprothrin and phenothrin is in a range of 1:1000:1000 to 1:0.001:0.001.

[Aspect 21] A composition in which the weight ratio of nicofluprole, imiprothrin and cyphenothrin is in a range of 1:1000:1000 to 1:0.001:0.001.

[Aspect 22] A composition in which the weight ratio of nicofluprole, imiprothrin and cyfluthrin is in a range of 1:1000:1000 to 1:0.001:0.001.

[Aspect 23] A composition in which the weight ratio of nicofluprole, imiprothrin and deltamethrin is in a range of 1:1000:1000 to 1:0.001:0.001.

[Aspect 24] A composition in which the weight ratio of nicofluprole, imiprothrin and cyhalothrin is in a range of 1:1000:1000 to 1:0.001:0.001.

[Aspect 25] A composition in which the weight ratio of nicofluprole, tetramethrin and permethrin is in a range of 1:1000:1000 to 1:0.001:0.001.

[Aspect 26] A composition in which the weight ratio of nicofluprole, tetramethrin and cypermethrin is in a range of 1:1000:1000 to 1:0.001:0.001.

[Aspect 27] A composition in which the weight ratio of nicofluprole, tetramethrin and phenothrin is in a range of 1:1000:1000 to 1:0.001:0.001.

[Aspect 28] A composition in which the weight ratio of nicofluprole, tetramethrin and cyphenothrin is in a range of 1:1000:1000 to 1:0.001:0.001.

[Aspect 29] A composition in which the weight ratio of nicofluprole, tetramethrin and cyfluthrin is in a range of 1:1000:1000 to 1:0.001:0.001.

[Aspect 30] A composition in which the weight ratio of nicofluprole, tetramethrin and deltamethrin is in a range of 1:1000:1000 to 1:0.001:0.001.

[Aspect 31] A composition in which the weight ratio of nicofluprole, tetramethrin and cyhalothrin is in a range of 1:1000:1000 to 1:0.001:0.001.

[Aspect 32] A composition in which the weight ratio of fluxametamide, imiprothrin and permethrin is in a range of 1:1000:1000 to 1:0.001:0.001.

[Aspect 33] A composition in which the weight ratio of fluxametamide, imiprothrin and cypermethrin is in a range of 1:1000:1000 to 1:0.001:0.001.

[Aspect 34] A composition in which the weight ratio of fluxametamide, imiprothrin and phenothrin is in a range of 1:1000:1000 to 1:0.001:0.001.

[Aspect 35] A composition in which the weight ratio of fluxametamide, imiprothrin and cyphenothrin is in a range of 1:1000:1000 to 1:0.001:0.001.

[Aspect 36] A composition in which the weight ratio of fluxametamide, imiprothrin and cyfluthrin is in a range of 1:1000:1000 to 1:0.001:0.001.

[Aspect 37] A composition in which the weight ratio of fluxametamide, imiprothrin and deltamethrin is in a range of 1:1000:1000 to 1:0.001:0.001.

[Aspect 38] A composition in which the weight ratio of fluxametamide, imiprothrin and cyhalothrin is in a range of 1:1000:1000 to 1:0.001:0.001.

[Aspect 39] A composition in which the weight ratio of fluxametamide, tetramethrin and permethrin is in a range of 1:1000:1000 to 1:0.001:0.001.

[Aspect 40] A composition in which the weight ratio of fluxametamide, tetramethrin and cypermethrin is in a range of 1:1000:1000 to 1:0.001:0.001.

[Aspect 41] A composition in which the weight ratio of fluxametamide, tetramethrin and phenothrin is in a range of 1:1000:1000 to 1:0.001:0.001.

[Aspect 42] A composition in which the weight ratio of fluxametamide, tetramethrin and cyphenothrin is in a range of 1:1000:1000 to 1:0.001:0.001.

[Aspect 43] A composition in which the weight ratio of fluxametamide, tetramethrin and cyfluthrin is in a range of 1:1000:1000 to 1:0.001:0.001.

[Aspect 44] A composition in which the weight ratio of fluxametamide, tetramethrin and deltamethrin is in a range of 1:1000:1000 to 1:0.001:0.001.

[Aspect 45] A composition in which the weight ratio of fluxametamide, tetramethrin and cyhalothrin is in a range of 1:1000:1000 to 1:0.001:0.001.

[Aspect 46] A composition in which the weight ratio of isocycloseram, imiprothrin and permethrin is in a range of 1:1000:1000 to 1:0.001:0.001.

[Aspect 47] A composition in which the weight ratio of isocycloseram, imiprothrin and cypermethrin is in a range of 1:1000:1000 to 1:0.001:0.001.

[Aspect 48] A composition in which the weight ratio of isocycloseram, imiprothrin and phenothrin is in a range of 1:1000:1000 to 1:0.001:0.001.

[Aspect 49] A composition in which the weight ratio of isocycloseram, imiprothrin and cyphenothrin is in a range of 1:1000:1000 to 1:0.001:0.001.

[Aspect 50] A composition in which the weight ratio of isocycloseram, imiprothrin and cyfluthrin is in a range of 1:1000:1000 to 1:0.001:0.001.

[Aspect 51] A composition in which the weight ratio of isocycloseram, imiprothrin and deltamethrin is in a range of 1:1000:1000 to 1:0.001:0.001.

[Aspect 52] A composition in which the weight ratio of isocycloseram, imiprothrin and cyhalothrin is in a range of 1:1000:1000 to 1:0.001:0.001.

[Aspect 53] A composition in which the weight ratio of isocycloseram, tetramethrin and permethrin is in a range of 1:1000:1000 to 1:0.001:0.001.

[Aspect 54] A composition in which the weight ratio of isocycloseram, tetramethrin and cypermethrin is in a range of 1:1000:1000 to 1:0.001:0.001.

[Aspect 55] A composition in which the weight ratio of isocycloseram, tetramethrin and phenothrin is in a range of 1:1000:1000 to 1:0.001:0.001.

[Aspect 56] A composition in which the weight ratio of isocycloseram, tetramethrin and cyphenothrin is in a range of 1:1000:1000 to 1:0.001:0.001.

[Aspect 57] A composition in which the weight ratio of isocycloseram, tetramethrin and cyfluthrin is in a range of 1:1000:1000 to 1:0.001:0.001.

[Aspect 58] A composition in which the weight ratio of isocycloseram, tetramethrin and deltamethrin is in a range of 1:1000:1000 to 1:0.001:0.001.

[Aspect 59] A composition in which the weight ratio of isocycloseram, tetramethrin and cyhalothrin is in a range of 1:1000:1000 to 1:0.001:0.001.

[Aspect 60] A composition in which the weight ratio of broflanilide, imiprothrin and permethrin is in a range of 1:100:100 to 1:0.01:0.01.

[Aspect 61] A composition in which the weight ratio of broflanilide, imiprothrin and cypermethrin is in a range of 1:100:100 to 1:0.01:0.01.

[Aspect 62] A composition in which the weight ratio of broflanilide, imiprothrin and phenothrin is in a range of 1:100:100 to 1:0.01:0.01.

[Aspect 63] A composition in which the weight ratio of broflanilide, imiprothrin and cyphenothrin is in a range of 1:100:100 to 1:0.01:0.01.

[Aspect 64] A composition in which the weight ratio of broflanilide, imiprothrin and cyfluthrin is in a range of 1:100:100 to 1:0.01:0.01.

[Aspect 65] A composition in which the weight ratio of broflanilide, imiprothrin and deltamethrin is in a range of 1:100:100 to 1:0.01:0.01.

[Aspect 66] A composition in which the weight ratio of broflanilide, imiprothrin and cyhalothrin is in a range of 1:100:100 to 1:0.01:0.01.

[Aspect 67] A composition in which the weight ratio of broflanilide, tetramethrin and permethrin is in a range of 1:100:100 to 1:0.01:0.01.

[Aspect 68] A composition in which the weight ratio of broflanilide, tetramethrin and cypermethrin is in a range of 1:100:100 to 1:0.01:0.01.

[Aspect 69] A composition in which the weight ratio of broflanilide, tetramethrin and phenothrin is in a range of 1:100:100 to 1:0.01:0.01.

[Aspect 70] A composition in which the weight ratio of broflanilide, tetramethrin and cyphenothrin is in a range of 1:100:100 to 1:0.01:0.01.

[Aspect 71] A composition in which the weight ratio of broflanilide, tetramethrin and cyfluthrin is in a range of 1:100:100 to 1:0.01:0.01.

[Aspect 72] A composition in which the weight ratio of broflanilide, tetramethrin and deltamethrin is in a range of 1:100:100 to 1:0.01:0.01.

[Aspect 73] A composition in which the weight ratio of broflanilide, tetramethrin and cyhalothrin is in a range of 1:100:100 to 1:0.01:0.01.

[Aspect 74] A composition in which the weight ratio of nicofluprole, imiprothrin and permethrin is in a range of 1:100:100 to 1:0.01:0.01.

[Aspect 75] A composition in which the weight ratio of nicofluprole, imiprothrin and cypermethrin is in a range of 1:100:100 to 1:0.01:0.01.

[Aspect 76] A composition in which the weight ratio of nicofluprole, imiprothrin and phenothrin is in a range of 1:100:100 to 1:0.01:0.01.

[Aspect 77] A composition in which the weight ratio of nicofluprole, imiprothrin and cyphenothrin is in a range of 1:100:100 to 1:0.01:0.01.

[Aspect 78] A composition in which the weight ratio of nicofluprole, imiprothrin and cyfluthrin is in a range of 1:100:100 to 1:0.01:0.01.

[Aspect 79] A composition in which the weight ratio of nicofluprole, imiprothrin and deltamethrin is in a range of 1:100:100 to 1:0.01:0.01.

[Aspect 80] A composition in which the weight ratio of nicofluprole, imiprothrin and cyhalothrin is in a range of 1:100:100 to 1:0.01:0.01.

[Aspect 81] A composition in which the weight ratio of nicofluprole, tetramethrin and permethrin is in a range of 1:100:100 to 1:0.01:0.01.

[Aspect 82] A composition in which the weight ratio of nicofluprole, tetramethrin and cypermethrin is in a range of 1:100:100 to 1:0.01:0.01.

[Aspect 83] A composition in which the weight ratio of nicofluprole, tetramethrin and phenothrin is in a range of 1:100:100 to 1:0.01:0.01.

[Aspect 84] A composition in which the weight ratio of nicofluprole, tetramethrin and cyphenothrin is in a range of 1:100:100 to 1:0.01:0.01.

[Aspect 85] A composition in which the weight ratio of nicofluprole, tetramethrin and cyfluthrin is in a range of 1:100:100 to 1:0.01:0.01.

[Aspect 86] A composition in which the weight ratio of nicofluprole, tetramethrin and deltamethrin is in a range of 1:100:100 to 1:0.01:0.01.

[Aspect 87] A composition in which the weight ratio of nicofluprole, tetramethrin and cyhalothrin is in a range of 1:100:100 to 1:0.01:0.01.

[Aspect 88] A composition in which the weight ratio of fluxametamide, imiprothrin and permethrin is in a range of 1:100:100 to 1:0.01:0.01.

[Aspect 89] A composition in which the weight ratio of fluxametamide, imiprothrin and cypermethrin is in a range of 1:100:100 to 1:0.01:0.01.

[Aspect 90] A composition in which the weight ratio of fluxametamide, imiprothrin and phenothrin is in a range of 1:100:100 to 1:0.01:0.01.

[Aspect 91] A composition in which the weight ratio of fluxametamide, imiprothrin and cyphenothrin is in a range of 1:100:100 to 1:0.01:0.01.

[Aspect 92] A composition in which the weight ratio of fluxametamide, imiprothrin and cyfluthrin is in a range of 1:100:100 to 1:0.01:0.01.

[Aspect 93] A composition in which the weight ratio of fluxametamide, imiprothrin and deltamethrin is in a range of 1:100:100 to 1:0.01:0.01.

[Aspect 94] A composition in which the weight ratio of fluxametamide, imiprothrin and cyhalothrin is in a range of 1:100:100 to 1:0.01:0.01.

[Aspect 95] A composition in which the weight ratio of fluxametamide, tetramethrin and permethrin is in a range of 1:100:100 to 1:0.01:0.01.

[Aspect 96] A composition in which the weight ratio of fluxametamide, tetramethrin and cypermethrin is in a range of 1:100:100 to 1:0.01:0.01.

[Aspect 97] A composition in which the weight ratio of fluxametamide, tetramethrin and phenothrin is in a range of 1:100:100 to 1:0.01:0.01.

[Aspect 98] A composition in which the weight ratio of fluxametamide, tetramethrin and cyphenothrin is in a range of 1:100:100 to 1:0.01:0.01.

[Aspect 99] A composition in which the weight ratio of fluxametamide, tetramethrin and cyfluthrin is in a range of 1:100:100 to 1:0.01:0.01.

[Aspect 100] A composition in which the weight ratio of fluxametamide, tetramethrin and deltamethrin is in a range of 1:100:100 to 1:0.01:0.01.

[Aspect 101] A composition in which the weight ratio of fluxametamide, tetramethrin and cyhalothrin is in a range of 1:100:100 to 1:0.01:0.01.

[Aspect 102] A composition in which the weight ratio of isocycloseram, imiprothrin and permethrin is in a range of 1:100:100 to 1:0.01:0.01.

[Aspect 103] A composition in which the weight ratio of isocycloseram, imiprothrin and cypermethrin is in a range of 1:100:100 to 1:0.01:0.01.

[Aspect 104] A composition in which the weight ratio of isocycloseram, imiprothrin and phenothrin is in a range of 1:100:100 to 1:0.01:0.01.

[Aspect 105] A composition in which the weight ratio of isocycloseram, imiprothrin and cyphenothrin is in a range of 1:100:100 to 1:0.01:0.01.

[Aspect 106] A composition in which the weight ratio of isocycloseram, imiprothrin and cyfluthrin is in a range of 1:100:100 to 1:0.01:0.01.

[Aspect 107] A composition in which the weight ratio of isocycloseram, imiprothrin and deltamethrin is in a range of 1:100:100 to 1:0.01:0.01.

[Aspect 108] A composition in which the weight ratio of isocycloseram, imiprothrin and cyhalothrin is in a range of 1:100:100 to 1:0.01:0.01.

[Aspect 109] A composition in which the weight ratio of isocycloseram, tetramethrin and permethrin is in a range of 1:100:100 to 1:0.01:0.01.

[Aspect 110] A composition in which the weight ratio of isocycloseram, tetramethrin and cypermethrin is in a range of 1:100:100 to 1:0.01:0.01.

[Aspect 111] A composition in which the weight ratio of isocycloseram, tetramethrin and phenothrin is in a range of 1:100:100 to 1:0.01:0.01.

[Aspect 112] A composition in which the weight ratio of isocycloseram, tetramethrin and cyphenothrin is in a range of 1:100:100 to 1:0.01:0.01.

[Aspect 113] A composition in which the weight ratio of isocycloseram, tetramethrin and cyfluthrin is in a range of 1:100:100 to 1:0.01:0.01.

[Aspect 114] A composition in which the weight ratio of isocycloseram, tetramethrin and deltamethrin is in a range of 1:100:100 to 1:0.01:0.01.

[Aspect 115] A composition in which the weight ratio of isocycloseram, tetramethrin and cyhalothrin is in a range of 1:100:100 to 1:0.01:0.01.

[Aspect 116] A composition in which the weight ratio of broflanilide, imiprothrin and permethrin is in a range of 1:10:10 to 1:0.1:0.1.

[Aspect 117] A composition in which the weight ratio of broflanilide, imiprothrin and cypermethrin is in a range of 1:10:10 to 1:0.1:0.1.

[Aspect 118] A composition in which the weight ratio of broflanilide, imiprothrin and phenothrin is in a range of 1:10:10 to 1:0.1:0.1.

[Aspect 119] A composition in which the weight ratio of broflanilide, imiprothrin and cyphenothrin is in a range of 1:10:10 to 1:0.1:0.1.

[Aspect 120] A composition in which the weight ratio of broflanilide, imiprothrin and cyfluthrin is in a range of 1:10:10 to 1:0.1:0.1.

[Aspect 121] A composition in which the weight ratio of broflanilide, imiprothrin and deltamethrin is in a range of 1:10:10 to 1:0.1:0.1.

[Aspect 122] A composition in which the weight ratio of broflanilide, imiprothrin and cyhalothrin is in a range of 1:10:10 to 1:0.1:0.1.

[Aspect 123] A composition in which the weight ratio of broflanilide, tetramethrin and permethrin is in a range of 1:10:10 to 1:0.1:0.1.

[Aspect 124] A composition in which the weight ratio of broflanilide, tetramethrin and cypermethrin is in a range of 1:10:10 to 1:0.1:0.1.

[Aspect 125] A composition in which the weight ratio of broflanilide, tetramethrin and phenothrin is in a range of 1:10:10 to 1:0.1:0.1.

[Aspect 126] A composition in which the weight ratio of broflanilide, tetramethrin and cyphenothrin is in a range of 1:10:10 to 1:0.1:0.1.

[Aspect 127] A composition in which the weight ratio of broflanilide, tetramethrin and cyfluthrin is in a range of 1:10:10 to 1:0.1:0.1.

[Aspect 128] A composition in which the weight ratio of broflanilide, tetramethrin and deltamethrin is in a range of 1:10:10 to 1:0.1:0.1.

[Aspect 129] A composition in which the weight ratio of broflanilide, tetramethrin and cyhalothrin is in a range of 1:10:10 to 1:0.1:0.1.

[Aspect 130] A composition in which the weight ratio of nicofluprole, imiprothrin and permethrin is in a range of 1:10:10 to 1:0.1:0.1.

[Aspect 131] A composition in which the weight ratio of nicofluprole, imiprothrin and cypermethrin is in a range of 1:10:10 to 1:0.1:0.1.

[Aspect 132] A composition in which the weight ratio of nicofluprole, imiprothrin and phenothrin is in a range of 1:10:10 to 1:0.1:0.1.

[Aspect 133] A composition in which the weight ratio of nicofluprole, imiprothrin and cyphenothrin is in a range of 1:10:10 to 1:0.1:0.1.

[Aspect 134] A composition in which the weight ratio of nicofluprole, imiprothrin and cyfluthrin is in a range of 1:10:10 to 1:0.1:0.1.

[Aspect 135] A composition in which the weight ratio of nicofluprole, imiprothrin and deltamethrin is in a range of 1:10:10 to 1:0.1:0.1.

[Aspect 136] A composition in which the weight ratio of nicofluprole, imiprothrin and cyhalothrin is in a range of 1:10:10 to 1:0.1:0.1.

[Aspect 137] A composition in which the weight ratio of nicofluprole, tetramethrin and permethrin is in a range of 1:10:10 to 1:0.1:0.1.

[Aspect 138] A composition in which the weight ratio of nicofluprole, tetramethrin and cypermethrin is in a range of 1:10:10 to 1:0.1:0.1.

[Aspect 139] A composition in which the weight ratio of nicofluprole, tetramethrin and phenothrin is in a range of 1:10:10 to 1:0.1:0.1.

[Aspect 140] A composition in which the weight ratio of nicofluprole, tetramethrin and cyphenothrin is in a range of 1:10:10 to 1:0.1:0.1.

[Aspect 141] A composition in which the weight ratio of nicofluprole, tetramethrin and cyfluthrin is in a range of 1:10:10 to 1:0.1:0.1.

[Aspect 142] A composition in which the weight ratio of nicofluprole, tetramethrin and deltamethrin is in a range of 1:10:10 to 1:0.1:0.1.

[Aspect 143] A composition in which the weight ratio of nicofluprole, tetramethrin and cyhalothrin is in a range of 1:10:10 to 1:0.1:0.1.

[Aspect 144] A composition in which the weight ratio of fluxametamide, imiprothrin and permethrin is in a range of 1:10:10 to 1:0.1:0.1.

[Aspect 145] A composition in which the weight ratio of fluxametamide, imiprothrin and cypermethrin is in a range of 1:10:10 to 1:0.1:0.1.

[Aspect 146] A composition in which the weight ratio of fluxametamide, imiprothrin and phenothrin is in a range of 1:10:10 to 1:0.1:0.1.

[Aspect 147] A composition in which the weight ratio of fluxametamide, imiprothrin and cyphenothrin is in a range of 1:10:10 to 1:0.1:0.1.

[Aspect 148] A composition in which the weight ratio of fluxametamide, imiprothrin and cyfluthrin is in a range of 1:10:10 to 1:0.1:0.1.

[Aspect 149] A composition in which the weight ratio of fluxametamide, imiprothrin and deltamethrin is in a range of 1:10:10 to 1:0.1:0.1.

[Aspect 150] A composition in which the weight ratio of fluxametamide, imiprothrin and cyhalothrin is in a range of 1:10:10 to 1:0.1:0.1.

[Aspect 151] A composition in which the weight ratio of fluxametamide, tetramethrin and permethrin is in a range of 1:10:10 to 1:0.1:0.1.

[Aspect 152] A composition in which the weight ratio of fluxametamide, tetramethrin and cypermethrin is in a range of 1:10:10 to 1:0.1:0.1.

[Aspect 153] A composition in which the weight ratio of fluxametamide, tetramethrin and phenothrin is in a range of 1:10:10 to 1:0.1:0.1.

[Aspect 154] A composition in which the weight ratio of fluxametamide, tetramethrin and cyphenothrin is in a range of 1:10:10 to 1:0.1:0.1.

[Aspect 155] A composition in which the weight ratio of fluxametamide, tetramethrin and cyfluthrin is in a range of 1:10:10 to 1:0.1:0.1.

[Aspect 156] A composition in which the weight ratio of fluxametamide, tetramethrin and deltamethrin is in a range of 1:10:10 to 1:0.1:0.1.

[Aspect 157] A composition in which the weight ratio of fluxametamide, tetramethrin and cyhalothrin is in a range of 1:10:10 to 1:0.1:0.1.

[Aspect 158] A composition in which the weight ratio of isocycloseram, imiprothrin and permethrin is in a range of 1:10:10 to 1:0.1:0.1.

[Aspect 159] A composition in which the weight ratio of isocycloseram, imiprothrin and cypermethrin is in a range of 1:10:10 to 1:0.1:0.1.

[Aspect 160] A composition in which the weight ratio of isocycloseram, imiprothrin and phenothrin is in a range of 1:10:10 to 1:0.1:0.1.

[Aspect 161] A composition in which the weight ratio of isocycloseram, imiprothrin and cyphenothrin is in a range of 1:10:10 to 1:0.1:0.1.

[Aspect 162] A composition in which the weight ratio of isocycloseram, imiprothrin and cyfluthrin is in a range of 1:10:10 to 1:0.1:0.1.

[Aspect 163] A composition in which the weight ratio of isocycloseram, imiprothrin and deltamethrin is in a range of 1:10:10 to 1:0.1:0.1.

[Aspect 164] A composition in which the weight ratio of isocycloseram, imiprothrin and cyhalothrin is in a range of 1:10:10 to 1:0.1:0.1.

[Aspect 165] A composition in which the weight ratio of isocycloseram, tetramethrin and permethrin is in a range of 1:10:10 to 1:0.1:0.1.

[Aspect 166] A composition in which the weight ratio of isocycloseram, tetramethrin and cypermethrin is in a range of 1:10:10 to 1:0.1:0.1.

[Aspect 167] A composition in which the weight ratio of isocycloseram, tetramethrin and phenothrin is in a range of 1:10:10 to 1:0.1:0.1.

[Aspect 168] A composition in which the weight ratio of isocycloseram, tetramethrin and cyphenothrin is in a range of 1:10:10 to 1:0.1:0.1.

[Aspect 169] A composition in which the weight ratio of isocycloseram, tetramethrin and cyfluthrin is in a range of 1:10:10 to 1:0.1:0.1.

[Aspect 170] A composition in which the weight ratio of isocycloseram, tetramethrin and deltamethrin is in a range of 1:10:10 to 1:0.1:0.1.

[Aspect 171] A composition in which the weight ratio of isocycloseram, tetramethrin and cyhalothrin is in a range of 1:10:10 to 1:0.1:0.1.

[Aspect A1] A composition in which Group (A) is Group consisting of broflanilide, nicofluprole and isocycloseram in the inventive composition.

[Aspect A2] A composition in which the present compound B is imiprothrin in the inventive composition.

[Aspect A3] A composition in which Group (C) is Group consisting of permethrin, cypermethrin, phenothrin, cyfluthrin and deltamethrin in the inventive composition.

[Aspect A4] A composition in which Group (A) is Group consisting of broflanilide, nicofluprole and isocycloseram, the present compound B is imiprothrin, and Group (C) is Group consisting of permethrin, cypermethrin, phenothrin, cyfluthrin and deltamethrin in the inventive composition.

[Aspect A5] A composition in which the weight ratio of the present compound A, the present compound B and the present compound C is in a range of 1:1000:1000 to 1:0.001:0.001 in any one of aspects A1 to A4.

[Aspect A6] A composition in which the weight ratio of the present compound A, the present compound B and the present compound C is in a range of 1:100:100 to 1:0.01:0.01 in any one of aspects A1 to A4.

[Aspect A7] A composition in which the weight ratio of the present compound A, the present compound B and the present compound C is in a range of 1:10:10 to 1:0.1:0.1 in any one of aspects A1 to A4.

The pest control composition of the present invention contains the present compound A, the present compound B and the present compound C and usually contains, in addition to the above compounds, at least one auxiliary agent for formulation selected from the group consisting of solid carriers, liquid carriers, oils and surfactants, and may optionally contain other auxiliary agents for formulation. The inventive composition is usually used after being formulated into oils, emulsifiable concentrates, wettable powders, flowable formulations (aqueous suspension, aqueous emulsion, etc.), microcapsules, dustable powders, granules, tablets, aerosols, carbon dioxide formulations, heat transpiration formulations (pesticidal incense, electric pesticidal mat, liquid absorbing core-type heat transpiration pesticide, etc.), piezo pesticidal formulations, heat fumigants (self-burning type fumigant, chemical reaction-type fumigant, porous ceramic plate fumigant, etc.), unheated transpiration formulations (resin transpiration formulation, paper transpiration formulation, unwoven fabric transpiration formulation, knit fabric transpiration formulation, etc.), aerosol formulations (fogging formulation, etc.), ultra low volume (ULV) formulations, direct contact formulations (sheet-shaped contact formulation, net-shaped contact formulation) or poison baits. The total amount of the present compound A, the present compound B and the present compound C contained in these formulations is usually in a range of 0.001 to 100% by weight, preferably 0.01 to 50% by weight, and more preferably 0.1 to 10% by weight, based on the total weight of the formulation.

Examples of the solid carriers include clays (kaolin clay, diatomaceous earth, bentonite, acid clay, etc.), dry silica, wet silica, talc, ceramic, other inorganic minerals (sericite, quartz, sulfur, activated charcoal, calcium carbonate, etc.), chemical fertilizers (ammonium sulfate, ammonium phosphate, ammonium nitrate, urea, ammonium chloride, etc.) in the form of fine powders or particulates, and synthetic resins (polyester resins such as polypropylene, polyacrylonitrile, methyl polymethacrylate and polyethylene terephthalate, nylon resins such as nylon-6, nylon-11 and nylon-66, polyamide resin, polyvinyl chloride, polyvinylidene chloride, vinyl chloride-propylene copolymer, etc.).

Examples of the liquid carriers include water, alcohols (methanol, ethanol, isopropyl alcohol, butanol, hexanol, benzyl alcohol, ethylene glycol, propylene glycol, phenoxyethanol, etc.), ketones (acetone, methyl ethyl ketone, cyclohexanone, etc.), aromatic hydrocarbons (toluene, xylene, ethylbenzene, dodecylbenzene, phenylxylylethane, methylnaphthalene, etc.), aliphatic hydrocarbons (hexane, cyclohexane, kerosene, light oil, etc.), esters (ethyl acetate, butyl acetate, isopropyl myristate, ethyl oleate, diisopropyl adipate, diisobutyl adipate, propylene glycol monomethyl ether acetate, etc.), nitriles (acetonitrile, isobutyronitrile, etc.), ethers (diisopropyl ether, 1,4-dioxane, 1,2-dimethoxyethane, diethylene glycol dimethyl ether, diethylene glycol monomethyl ether, propylene glycol monomethyl ether, dipropylene glycol monomethyl ether, 3-methoxy-3-methyl-1-butanol, etc.), amides (DMF, N,N-dimethylacetamide, etc.), sulfoxides (DMSO, etc.), propylene carbonate, and vegetable oil (soybean oil, cottonseed oil etc.).

Examples of the surfactants include alkylsulfuric acid ester salt, alkyl sulfonate, alkyl aryl sulfonate, alkyl aryl ethers, polyoxyethylenated products of alkyl aryl ethers, polyethylene glycol ethers, polyhydric alcohol esters, and sugar alcohol derivatives.

Examples of other auxiliary agents for formulation include stickers, dispersers and stabilizers, specifically casein, gelatin, polysaccharides (starch, gum arabic, cellulose derivatives, alginic acid, etc.), lignin derivatives, bentonite, saccharides, water-soluble synthetic polymers (polyvinyl alcohol, polyvinylpyrrolidone, polyacrylic acids, etc.), BHT (2,6-di-tert-butyl-4-methylphenol), and BHA (a mixture of 2-tert-butyl-4-methoxyphenol and 3-tert-butyl-4-methoxyphenol).

The inventive composition can also be prepared by formulating the present compound A, the present compound B and the present compound C, respectively, by the method mentioned above, optionally diluting with water, and mixing the respective formulations or diluted solutions thereof.

The inventive composition may further contain other one or more insecticides and/or synergists.

The habitat of pests and/or the place where the appearance thereof is expected in the present invention mean(s) the place through which pests can pass and/or the place where pests can inhabit. The control method of the present invention is performed by spraying the effective amount of the inventive composition to pests, the place through which pests can pass and/or the place where pests can inhabit. Specifically, the control method is performed by spraying the inventive composition to pests, the place through which pests can pass and/or the place where pests can inhabit, using the formulation containing the inventive composition. In practical use, it is desirable to spray the formulation containing the present compound to the space of a place to be controlled. The amount of the formulation sprayed is usually 0.001 to 1,000 mg/m$^3$, preferably 0.001 to 100 mg/m$^3$, and more preferably 0.01 to 10 mg/m$^3$, in terms of the active ingredient of the inventive composition (the total amount of the present compound A, the present compound B and the present compound C). Examples of the space to which the formulation containing the present compound is sprayed include rooms, living rooms, dining rooms, closets, chests such as Japanese chest, cupboards, toilets, bathrooms, storage rooms, warehouses and car interiors, and the formulation can also be sprayed to outdoor open space.

As used herein, the pests include arthropods and mollusks which are harmful to humans and domestic animals, and arthropods and mollusks which are disliked because of their weird shapes or large outbreaks (also referred to as "nuisance insect pests"). Specific examples thereof include the following.

Blattodea:

Family: Ectobiidae such as German cockroach (Blattella germanica); Family: Blattidae such as smoky-brown cockroach (Periplaneta fuliginosa), American cockroach (Periplanetaamericana), Australian cockroach (Periplaneta australasiae), brown cockroach (Periplaneta brunnea), black cockroach (Blatta orientalis), Turkistan cockroach (Blatta lateralis), Brown-banded cockroach (Supella longipalpa).

Siphonaptera:

Family: Pulicidae such as human flea (Pulex irritans), cat flea (Ctenocephalides felis), dog flea (Ctenocephalides canis), oriental rat flea (Xenopsylla cheopis), chicken flea (Echidnophaga gallinacea); Family: Hectopsyllidae such as chigoe flea (Tunga penetrans); Family: Ceratophyllidae such as European rat flea (Nosopsyllus fasciatus).

Psocodae:

Family: Trogiidae such as book lice (Trogium pulsatorium); Family: Liposcelidae or Liposcelididae such as book lice (Liposcelis corrodens), book lice (Liposcelis bostrychophila), Grocelis booklouse (Liposcelis pearmani), dried fish booklouse (Liposcelis entomophila).

Thysanura:

Family: Lepismatidae such as oriental silverfish (Ctenolepisma villosa), moth fish (Lepisma saccharina).

Acari:

Family: Ixodidae such as Haemaphysalis longicornis, Haemaphysalis flava, Haemaphysalis japonica, Haemaphysalis campanulata, American dog tick (Dermacentor variabilis), Dermacentor taiwanensis, Rocky Mountain wood tick (Dermacentor andersoni), ornate cow tick (Dermacentor reticulatus), Ixodes ovatus, taiga tick (Ixodes persulcatus), black-legged tick (Ixodes scapularis), western black-legged tick (Ixodes pacificus), Ixodes holocyclus, Ixodes ricinus, lone star tick (Amblyomma americanum), gulf coast tick (Amblyomma maculatum), pantropic cattle tick (Rhipicephalus microplus), cattle tick (Rhipicephalus annulatus), brown dog tick (Rhipicephalus sanguineus), Rhipicephalus appendiculatus, Rhipicephalus decoloratus; Family: Argasidae such as fowl tick (Argas persicus), Ornithodoros hermsi, Ornithodoros turicata; Family: Acaridae such as cereal mite (Tyrophagus putrescentiae), grassland mite (Tyrophagus similis); Family: Pyroglyphidae such as American house dust mite (Dermatophagoides farinae), European house dust mite (Dermatophagoides pteronyssinus); Family: Cheyletidae such as Cheyletus eruditus, Cheyletus malaccensis, Chelacaropsis moorei, Cheyletiella yasguri; Family: Psoroptidae such as sheep scab mite (Psoroptes ovis), horse psoroptic mange mite (Psoroptes equi), Knemidocoptes mutans, ear mange mite (Otodectes cynotis), genus Chorioptes spp.; Family: Sarcoptidae such as Notoedres cati, Notoedres muris, itch mite (Sarcoptes scabiei); Family: Listrophoridae such as Listrophorus gibbus; Family: Dermanyssidae such as bird mite (Dermanyssus gallinae); Family: Macronyssidae such as feather mite (Ornithonyssus sylviarum), tropical rat mite (Ornithonyssus bacoti); Family: Varroidae such as Varroa mite (Varroa jacobsoni); Family: Demodicidae such as dog follicle mite (Demodex canis), cat follicle mite (Demodex cati); Family: Trombiculidae such as Leptotrombidium akamushi, Leptotrombidium pallidum, Leptotrombidium scutellare.

Hymenoptera:

Family: Formicidae, for example, Genus: Solenopsis spp. such as red imported fire ant (Solenopsis invicta), tropical fire ant (Solenopsis geminata), southern fire ant (Solenopsis xyloni), black imported fire ant (Solenopsis richteri), Genus: Atta spp. such as brown leaf-cutting ant (Atta capiguara), Genus: Acromyrmex spp., Genus: Camponotus spp. such as bullet ant (Paraponera clavata), black house ant (Ochetellus glaber), little red ant (Monomorium pharaonis), Argentine ant (Linepithema humile), fire ant (Formica japonica), Japanese queenless ant (Pristomyrmex punctutus), African big-headed ant (Pheidole noda), big-headed ant (Pheidole megacephala), Japanese carpenter ant (Camponotus japonicus), Western honey bee (Camponotus obscuripes), black carpenter ant (Camponotus pennsylvanicus), Florida carpenter ant (Camponotus floridanus), Western carpenter ant (Camponotus modoc), Genus: Pogonomyrmex spp. such as harvester ant (Pogonomyrmex sp.), western harvester ant (Pogonomyrmex occidentalis), Genus: Wasmania spp. such as little fire ant (Wasmania auropunctata), Genus: Crematogaster spp., odorous house ant (Tapinoma sessile), pavement ant (Tetramorium caespitum), pyramid ant (Dorymyrmex insanus), European fire ant (Myrmica rubra), long-legged ant (Anoplolepis gracilipes); Family: Vespidae such as Asian giant hornet (Vespa mandarinia), Japanese yellow hornet (Vespa simillima), yellow-vented hornet (Vespa analis), Asian yellow-legged hornet (Vespa velutina), Dark-waist paper wasp (Polistes jokahamae); Family: Siricidae such as woodwasp (Urocerus gigas); Family: Bethylidae.

Coleoptera:

Family: Curculionidae such as maize wevil (Sitophilus zeamais), rice weevil (Sitophilusoryzae), grain weevil (Sitophilus granarius); Family: Tenebrionidae such as red meal beetle (Tribolium castaneum), mason beetle (Tribolium confusum), lesser mealworm (Alphitobius diaperinus); Family: Bostrychidae such as common powder-post beetle (Lyctus brunneus), lesser grain borer (Rhizopertha dominica); Family: Ptinidae; Family: Cerambycidae such as citrus long-horned beetle (Anoplophora malasiaca), Migdolus fryanus, redneck longhorned beetle (Aromiabungii); Family: Elateridae such as sugarcane wireworm (Melanotusokinawensis), barley wireworm (Agriotes fuscicollis), click beetles (Melanotus legatus), genus Anchastus spp., genus Conoderus spp., genus Ctenicera spp., genus Limonius spp., genus Aeolusspp.; Family: Staphylinidae such as rove beetle (Paederus fuscipes); Family: Dermestidae such as varied carpet beetle (Anthrenus verbasci), hide beetle (Dermestes maculates), khapra beetle (Trogoderma granarium); Family: Anobiidae such as tobacco beetle (Lasioderma serricorne), biscuit beetle (Stegobium paniceum); Family: Laemophloeidae such as flat grain beetle (Cryptolestes ferrugineus); Family: Silvanidae such as saw-toothed grain beetle (Oryzaephilus surinamensis); Family: Nitidulidae such as blossom beetle (Brassicogethes aeneus).

Diptera:

Family: Drosophilidae such as cherry drosophila (Drosophila suzukii), common fruit fly(Drosophila melanogaster); Family: Phoridae such as Megaselia spiracularis; Family: Psychodidae such as bathroom fly (Clogmia albipunctata); Family: Sciaridae such as Bradysia difformis; Family: Culicidae such as southern house mosquito (Culex pipiens pallens), house mosquito (Culex tritaeniorhynchus), autogenic house mosquito (Culex pipiens f. molestus), brown house mosquito (Culex quinquefasciatus), northern house mosquito (Culex pipiens pipiens), Culex vishnui, Asian tiger mosquito (Aedes albopictus), dengue mosquito (Aedes aegypti), Chinese malaria mosquito (Anopheles sinensis), African malaria mosquito (Anopheles gambiae), Anopheles stephensi, Western malaria mosquito (Anopheles freeborni), woodland malaria mosquito (Anopheles punctipennis), common malaria mosquito (Anopheles quadrimaculatus), Anopheles coluzzii, Anopheles albimanus, Anopheles sundaicus, Anopheles arabiensis, Anopheles funestus, Anopheles darlingi, Anopheles farauti, Anopheles minimus; Family: Simulidae such as Prosimulium yezoensis, Simulium ornatum, black fly (Simulium spp.); Family: Tabanidae such as Gadfly (Tabanus trigonus), black house fly (Tabanus atratus), stripe black house fly (Tabanus lineola), deer fly (Chrysops sp.); Family: Muscidae such as house fly (Musca domestica), false stable fly (Muscina stabulans), biting house fly (Stomoxys calcitrans), buffalo fly (Haematobia irritans); Family: Calliphoridae such as Lucilia sp., Calliphora sp.; Family: Sarcophagidae such as flesh fly (Sarcophaga sp., Wohlfahrtia sp.); Family: Ceratopogonidae such as black gnat (Leptoconops sp.); Family: Chironomidae such as non-biting midges (Chironomus plumosus), Chironomus yoshimatsui, Glyptotendipes tokunagai; Family: Fannidae.

Lepidoptera:

Family: Tineidae such as casemaking clothes moth (Tinea translucens), common clothes moth (Tineola bisselliella).

Hemiptera:

Family: Cimicidae such as common bed bug (Cimex lectularius), tropical bed bug (Cimex hemipterus); Family: Cicadidae such as Quesada gigas; Family: Reduviidae such as Triatoma infestans, Triatoma rubrofasciata, Triatomadimidiata, Triatoma sanguisuga, Triatoma protracta, Rhodonius prolixus.

Araneae:

Family: Eutichuridae such as Cheiracanthium japonicum;
Family: Theridiidae such as red-back spider (Latrodectus hasseltii).

Polydesmida:
Family: Paradoxosomatidae such as flat-backed millipede (Oxidus gracilis), Nedyopus tambanus.
Isopoda:
Family: Armadillidiidae such as common pill bug (Armadillidium vulgare).
Chilopoda:
Family: Scutigeridae such as Thereuonema hilgendorfi; Family: Scolopendridae such as giant tropical centipede (Scolopendra subspinipes); Family: Ethopolyidae such as Bothropolys rugosus.
Gastropoda:
Family: Limacidae such as tree slug (Limax marginatus), garden tawny slug (Limax flavus); Family: Philomycidae such as Japanese native slug (Meghimatium bilineatum); Family: Ampullariidae such as golden apple snail (Pomacea canaliculata); Family: Lymnaeidae such as pond snail (Austropeplea ollula).

[Examples]

The present invention will be described in more detail below by way of examples of the inventive composition, Formulation Examples, and Test Examples, but the present invention is not limited to these Examples.

First, specific examples of the inventive composition are shown below.

The following list L shows the inventive compositions Mi1 to Mi56 in which the weight ratio of the present compound A, the present compound B and the present compound C is 1:1:1. For example, the inventive composition Mi1 contains broflanilide, imiprothrin and permethrin in a weight ratio of 1:1:1.

List L:

Mi1: Broflanilide+imiprothrin+permethrin
Mi2: Broflanilide+imiprothrin+cypermethrin
Mi3: Broflanilide+imiprothrin+phenothrin
Mi4: Broflanilide+imiprothrin+cyphenothrin
Mi5: Broflanilide+imiprothrin+cyfluthrin
Mi6: Broflanilide+imiprothrin+deltamethrin
Mi7: Broflanilide+imiprothrin+cyhalothrin
Mi8: Broflanilide+tetramethrin+permethrin
Mi9: Broflanilide+tetramethrin+cypermethrin
Mi10: Broflanilide+tetramethrin+phenothrin
Mi11: Broflanilide+tetramethrin+cyphenothrin
Mi12: Broflanilide+tetramethrin+cyfluthrin
Mi13: Broflanilide+tetramethrin+deltamethrin
Mi14: Broflanilide+tetramethrin+cyhalothrin
Mi15: Nicofluprole+imiprothrin+permethrin
Mi16: Nicofluprole+imiprothrin+cypermethrin
Mi17: Nicofluprole+imiprothrin+phenothrin
Mi18: Nicofluprole+imiprothrin+cyphenothrin
Mi19: Nicofluprole+imiprothrin+cyfluthrin
Mi20: Nicofluprole+imiprothrin+deltamethrin
Mi21: Nicofluprole+imiprothrin+cyhalothrin
Mi22: Nicofluprole+tetramethrin+permethrin
Mi23: Nicofluprole+tetramethrin+cypermethrin
Mi24: Nicofluprole+tetramethrin+phenothrin
Mi25: Nicofluprole+tetramethrin+cyphenothrin
Mi26: Nicofluprole+tetramethrin+cyfluthrin
Mi27: Nicofluprole+tetramethrin+deltamethrin
Mi28: Nicofluprole+tetramethrin+cyhalothrin
Mi29: Fluxametamide+imiprothrin+permethrin
Mi30: Fluxametamide+imiprothrin+cypermethrin

Mi31: Fluxametamide+imiprothrin+phenothrin
Mi32: Fluxametamide+imiprothrin+cyphenothrin
Mi33: Fluxametamide+imiprothrin+cyfluthrin
Mi34: Fluxametamide+imiprothrin+deltamethrin
Mi35: Fluxametamide+imiprothrin+cyhalothrin
Mi36: Fluxametamide+tetramethrin+permethrin
Mi37: Fluxametamide+tetramethrin+cypermethrin
Mi38: Fluxametamide+tetramethrin+phenothrin
Mi39: Fluxametamide+tetramethrin+cyphenothrin
Mi40: Fluxametamide+tetramethrin+cyfluthrin
Mi41: Fluxametamide+tetramethrin+deltamethrin
Mi42: Fluxametamide+tetramethrin+cyhalothrin
Mi43: Isocycloseram+imiprothrin+permethrin
Mi44: Isocycloseram+imiprothrin+cypermethrin
Mi45: Isocycloseram+imiprothrin+phenothrin
Mi46: Isocycloseram+imiprothrin+cyphenothrin
Mi47: Isocycloseram+imiprothrin+cyfluthrin
Mi48: Isocycloseram+imiprothrin+deltamethrin
Mi49: Isocycloseram+imiprothrin+cyhalothrin
Mi50: Isocycloseram+tetramethrin+permethrin
Mi51: Isocycloseram+tetramethrin+cypermethrin
Mi52: Isocycloseram+tetramethrin+phenothrin
Mi53: Isocycloseram+tetramethrin+cyphenothrin
Mi54: Isocycloseram+tetramethrin+cyfluthrin
Mi55: Isocycloseram+tetramethrin+deltamethrin
Mi56: Isocycloseram+tetramethrin+cyhalothrin

List M: The inventive compositions Mii1 to Mii56 in which, in a combination of the present compound A, the present compound B and the present compound C in the inventive compositions Mi1 to Mi56 shown in List L, the weight ratio of the compounds is 1:1:10.

List N: The inventive compositions Miii1 to Miii56 in which, in a combination of the present compound A, the present compound B and the present compound C in the inventive compositions Mi1 to Mi56 shown in List L, the weight ratio of the compounds is 1:10:1.

List O: The inventive compositions Miv1 to Miv56 in which, in a combination of the present compound A, the present compound B and the present compound C in the inventive compositions Mi1 to Mi56 shown in List L, the weight ratio of the compounds is 1:10:10.

List P: The inventive compositions Mv1 to Mv56 in which, in a combination of the present compound A, the present compound B and the present compound C in the inventive compositions Mi1 to Mi56 shown in List L, the weight ratio of the compounds is 1:100:1.

List Q: The inventive compositions Mvi1 to Mvi56 in which, in a combination of the present compound A, the present compound B and the present compound C in the inventive compositions Mi1 to Mi56 shown in List L, the weight ratio of the compounds is 1:100:10.

List R: The inventive compositions Mvii1 to Mvii56 in which, in a combination of the present compound A, the present compound B and the present compound C in the inventive compositions Mi1 to Mi56 shown in List L, the weight ratio of the compounds is 1:0.1:0.1.

List S: The inventive compositions Mviii1 to Mviii56 in which, in a combination of the present compound A, the present compound B and the present compound C in the inventive compositions Mi1 to Mi56 shown in List L, the weight ratio of the compounds is 1:0.1:1.

List T: The inventive compositions Mix1 to Mix56 in which, in a combination of the present compound A, the present compound B and the present compound C in the inventive compositions Mi1 to Mi56 shown in List L, the weight ratio of the compounds is 1:1:0.1.

List U: The inventive compositions Mx1 to Mx56 in which, in a combination of the present compound A, the present compound B and the present compound C in the inventive compositions Mi1 to Mi56 shown in List L, the weight ratio of the compounds is 1:10:0.1.

List V: The inventive compositions Mxi1 to Mxi56 in which, in a combination of the present compound A, the present compound B and the present compound C in the inventive compositions Mi1 to Mi56 shown in List L, the weight ratio of the compounds is 1:0.01:0.01.

List W: The inventive compositions Mxii1 to Mxii56 in which, in a combination of the present compound A, the present compound B and the present compound C in the inventive compositions Mi1 to Mi56 shown in List L, the weight ratio of the compounds is 1:0.01:0.1.

List X: The inventive compositions Mxiii1 to Mxiii56 in which, in a combination of the present compound A, the present compound B and the present compound C in the inventive compositions Mi1 to Mi56 shown in List L, the weight ratio of the compounds is 1:0.1:0.01.

List Y: The inventive compositions Mxiv1 to Mxiv56 in which, in a combination of the present compound A, the present compound B and the present compound C in the inventive compositions Mi1 to Mi56 shown in List L, the weight ratio of the compounds is 1:1:0.01.

Formulation Examples are shown below. Parts are by weight. MX means any one inventive composition selected from Mi1 to Mi56, Mii1 to Mii56, Miii1 to Miii56, Miv1 to Miv56, Mv1 to Mv56, Mvi1 to Mvi56, Mvii1 to Mvii56, Mviii1 to Mviii56, Mix1 to Mix56, Mx1 to Mx56, Mxi1 to Mxi56, Mxii1 to Mxii56, Mxiii1 to Mxiii56, and Mxiv1 to Mxiv56.

Formulation Example 1

9.9 Parts of MX is dissolved in 37.5 parts of xylene and 37.5 parts of N,N-dimethylformamide. To this solution, 9.1 parts of polyoxyethylene styryl phenyl ether and 6 parts of calcium dodecylbenzene sulfonate are added, followed by well stirring and mixing to obtain emulsifiable concentrates.

Formulation Example 2

To 40 parts of MX, 5 parts of Sorpol 5060 (registered trademark of TOHO Chemical Industry Co., Ltd.) is added, and after mixing well, 32 parts of Carplex #80 (registered trademark of SHIONOGI & CO., LTD., synthetic hydrous silicon oxide fine powder) and 23 parts of 300 mesh diatomaceous earth are added, followed by mixing with a juice mixer to obtain wettable powders.

Formulation Example 3

To 3.3 parts of MX, 5 parts of synthetic hydrous silicon oxide fine powder, 5 parts of sodium dodecyl benzenesulfonate, 30 parts of bentonite and 56.7 parts of clay are added, and after well stirring and mixing, an appropriate amount of water is added to the mixture, followed by stirring, granulation with a granulator and further through circulation drying to obtain granules.

Formulation Example 4

5.5 Parts of MX, 1 part of synthetic hydrous silicon oxide fine powder, 1 part of Driless B (manufactured by Sankyo Co., Ltd.) as a flocculant and 7 parts of clay are mixed well with a mortar, followed by stirring and mixing with a juice mixer. To the mixture thus obtained, 85.5 parts of cut clay is added, followed by well stirring and mixing to obtain dustable powders.

Formulation Example 5

11 Parts of MX, 35 parts of white carbon containing a half amount of polyoxyethylene alkyl ether sulfate ammonium salt and 54 parts of water are finely ground by a wet grinding method to obtain dustable powders.

Formulation Example 6

0.15 Part of MX is dissolved in 10 parts of dichloromethane, followed by mixing with 89.5 parts of an isoparaffin solvent (Isopar M: registered trade name of Exxon Chemical Company) to obtain oils.

Formulation Example 7

In an aerosol can, 0.15 part of MX and 49.85 parts of Neothiozol (manufactured by Chuo Kasei Co., Ltd.) are charged, and an aerosol valve is attached to the aerosol can. The aerosol can is filled with 25 parts of dimethyl ether and 25 parts of LPG, and after shaking, an actuator is attached to the aerosol can to obtain oily aerosols.

Formulation Example 8

An aerosol container is filled with a mixture 0.55 part of MX, 0.01 part of BHT, 5 parts of xylene, 3.44 parts of deodorized kerosene and 1 part of an emulsifier {Atmos 300 (registered trade name of Atmos Chemical Co., Ltd.)}, and 50 parts of distilled water, and after attaching a valve part to the aerosol container, the aerosol container is filled with 40 parts of a propellant (LPG) through the valve under pressure to obtain aqueous aerosols.

Formulation Example 9

3.3 Parts of MX is dissolved in 14.6 parts of acetone to obtain a solution. To this solution, 0.2 part of zinc oxide, 1.0 part of α-starch and 42.8 parts azodicarbonamide are added. After adding 38.1 parts of water, the mixture is kneaded and formed into a granular shape with an extruder, and then dried. The granules thus obtained are put into a space in the upper part of a container having a partition wall made of aluminum in the central part thereof, and 50 g of calcium oxide is put into a space in the lower part of the container to obtain fumigants.

Formulation Example 10

0.5 Part of zinc oxide, 2 parts of α-starch and 97.5 parts of azodicarbonamide are mixed and water is added thereto. The mixture is kneaded and formed into a granular shape with an extruder, and then dried to obtain granules. The granules (2 g) thus obtained are uniformly impregnated with an acetone solution containing 0.638 g of MX and then dried to obtain granules. The granules thus obtained are put into a space in the upper part of a container having a partition wall made of aluminum in the central part thereof, and 50 g of calcium oxide is put into a space in the lower part of the container to obtain fumigants.

Formulation Example 11

0.22 Part of MX and 49.78 parts of Neothiozol (manufactured by Chuo Kagaku Co., Ltd.) are charged in an aerosol can, and an aerosol valve is attached the aerosol can. The aerosol can is filled with 25 parts of dimethyl ether and 25 parts of LPG, and after shaking, an actuator for total amount spraying-type aerosol is attached thereto to obtain aerosols.

Next, the usefulness of the inventive composition for controlling pests will be indicated by Test Examples. In general, the control effect to be expected when treated with a mixture obtained by mixing given two or three types of active ingredient compounds is determined by the Colby's calculation equation represented by the following [Equation 1] and [Equation 2].

[Equation 1]

$$E_A = P + Q - (P \times Q)/100$$

P: moribund and mortal rates (%) when treated with an active ingredient compound X in the concentration of m [ppm]
Q: moribund and mortal rates (%) when treated with an active ingredient compound Y in the concentration of n [ppm]
$E_A$ : moribund and mortal rates (%) when treated with an active ingredient compound X in the concentration of m [ppm] and an active ingredient compound Y in the concentration of n [ppm] (hereinafter referred to as expected value A)

[Equation 2]

$$E_B = P + Q + R - (P \times Q + P \times R + Q \times R)/100 + P \times Q \times R/10000$$

P: moribund and mortal rates (%) when treated with an active ingredient compound X in the concentration of m [ppm]
Q: moribund and mortal rates (%) when treated with an active ingredient compound Y in the concentration of n [ppm]
R: moribund and mortal rates (%) when treated with an active ingredient compound Z in the concentration of o [ppm]
$E_B$ : moribund and mortal rates (%) when treated with an active ingredient compound X in the concentration of m [ppm] and an active ingredient compound Y in the concentration of n [ppm] and active ingredient compound Z in the concentration of o [ppm] (hereinafter referred to as expected value B)

Regarding the synergistic effect of three types of the active ingredient compounds, in case where the moribund and mortal rates (%) when actually treated with a mixture obtained by mixing three types of the active ingredient compounds exceed the expected value A calculated by using the moribund and mortal rates (%) when actually treated with a mixture obtained by mixing two types of the active ingredient compounds among three types thereof, and the moribund and mortal rates (%) calculated when actually treated the remaining one type of the active ingredient compound, or the expected value B (%) calculated from the moribund and mortal rates (%) when actually treated with each of three types of the active ingredient compounds alone, it was determined that the synergistic effect exists.

Test Example 1: Control Test against German Cockroaches

(Blattella Germanica)

In a plastic cup (diameter: 12.4 cm, height: 10.2 cm), ten adult German cockroaches (Blattella germanica) (five males and five females each) were released, and the plastic cup was placed in the center of the bottom of a box-shaped chamber (46 cm × 46 cm × 70 cm in height). From the height of 60 cm, 1.5 mL of each of formulations prepared by dissolving a single agent of any one of broflanilide, imiprothrin and cypermethrin, or a mixed agent of two or more thereof in a mixture of isopropyl alcohol and Isopar M at a mixing ratio of 1:9 was sprayed under a spray pressure of 0.041 MPa. After a lapse of 120 minutes from spraying, the number of dead and moribund individuals was examined, and moribund and mortal rates (%) were determined by the equation 3 below. The test was performed through two replicates. Dead individuals are completely immobile individuals, and moribund individuals are individuals who cannot get up when turned on their backs. The results are shown in Table 1.
The expected value obtained by the Colby's calculation equation is shown in Table 2.

Moribund and mortal rates (%) = {(number of dead individuals + number of moribund individuals)/ number of tested individuals} × 100 (Equation 3)

[Table 1]

| Active ingredient | Concentration [%] | Moribund and mortal rates [%] after 120 minutes |
|---|---|---|
| Broflanilide | 0.01 | 5 |
| Imiprothrin | 0.01 | 15 |
| Cypermethrin | 0.01 | 45 |
| Broflanilide+imiprothrin | 0.01+0.01 | 15 |
| Broflanilide+cypermethrin | 0.01+0.01 | 60 |
| Imiprothrin+cypermethrin | 0.01+0.01 | 90 |
| Broflanilide+imiprothrin +cypermethrin | 0.01+0.01+0.01 | 100 |

[Table 2]

| Active ingredient | Concentration [%] | Expected value [%] of moribund and mortal rates after 120 minutes |
|---|---|---|
| (Broflanilide+imiprothrin) +cypermethrin | (0.01 + 0.01)+0.01 | 53 |
| (Broflanilide+cypermethrin) +imiprothrin | (0.01+0.01)+0.01 | 66 |
| Broflanilide + (imiprothrin+cypermethrin) | 0.01+(0.01+0.01) | 91 |
| Broflanilide+imiprothrin +cypermethrin | 0.01+0.01+0.01 | 56 |

Test Example 2: Control Test against German Cockroaches

(Blattella Germanica)

In a plastic cup (diameter: 12.4 cm, height: 10.2 cm) lined with a filter paper, ten adult German cockroaches (Blattella germanica) (five males and five females each) were released, and the plastic cup was placed in the center of the bottom of a box-shaped chamber (46 cm × 46 cm × 70 cm in height). From the height of 60 cm, 1.5 mL of each of formulations prepared by dissolving a single agent of any one of nicofluprole, imiprothrin and cypermethrin, or a mixed agent of two or more thereof in a mixture of isopropyl alcohol and Isopar M at a mixing ratio of 1:9 was sprayed under a spray pressure of 0.041 MPa. After a lapse of 120 minutes from spraying, the number of dead and moribund individuals was examined, and moribund and mortal rates (%) were determined by the above equation 3. The test was performed through two replicates. Dead individuals are completely immobile individuals, and moribund individuals are individuals who cannot get up when turned on their backs. The results are shown in Table 3. The expected value obtained by the Colby's calculation equation is shown in Table 4.

[Table 3]

| Active ingredient | Concentration [%] | Moribund and mortal rates [%] after 120 minutes |
|---|---|---|
| Nicofluprole | 0.01 | 0 |
| Imiprothrin | 0.01 | 15 |
| Cypermethrin | 0.01 | 15 |
| Nicofluprole+imiprothrin | 0.01+0.01 | 45 |
| Nicofluprole+cypermethrin | 0.01+0.01 | 55 |
| Imiprothrin+cypermethrin | 0.01+0.01 | 80 |
| Nicofluprole+imiprothrin +cypermethrin | 0.01+0.01+0.01 | 100 |

[Table 4]

| Active ingredient | Concentration [%] | Expected value [%] of moribund and mortal rates after 120 minutes |
|---|---|---|
| (Nicofluprole+imiprothrin) +cypermethrin | (0.01 + 0.01)+0.01 | 53 |
| (Nicofluprole+cypermethrin) +imiprothrin | (0.01+0.01)+0.01 | 62 |
| Nicofluprole + (imiprothrin+cypermethrin) | 0.01+(0.01+0.01) | 80 |
| Nicofluprole+imiprothrin +cypermethrin | 0.01+0.01+0.01 | 28 |

Test Example 3: Control Test against German Cockroaches

(Blattella Germanica)

In a plastic cup (diameter: 12.4 cm, height: 10.2 cm) lined with a filter paper, ten adult German cockroaches (Blattella germanica) (five males and five females each) were released, and the plastic cup was placed in the center of the bottom of a box-shaped chamber (46 cm × 46 cm × 70 cm in height). From the height of 60 cm, 1.5 mL of each of formulations prepared by dissolving a single agent of any one of broflanilide, imiprothrin and cyfluthrin, or a mixed agent of two or more thereof in a mixture of isopropyl alcohol and Isopar M at a mixing ratio of 1:9 was sprayed under a spray pressure of 0.041 MPa. After a lapse of 420 minutes from spraying, the number of dead and moribund individuals was examined, and moribund and mortal rates (%) were determined by the above equation 3. The test was performed through two replicates. Dead individuals are completely immobile individuals, and moribund individuals are individuals who cannot get up when turned on their backs. The results are shown in Table 5. The expected value obtained by the Colby's calculation equation is shown in Table 6.

[Table 5]

| Active ingredient | Concentration [%] | Moribund and mortal rates [%] after 420 minutes |
|---|---|---|
| Broflanilide | 0.02 | 70 |
| Imiprothrin | 0.01 | 15 |
| Cyfluthrin | 0.0016 | 0 |
| Broflanilide+imiprothrin | 0.02+0.01 | 75 |

(continued)

| Active ingredient | Concentration [%] | Moribund and mortal rates [%] after 420 minutes |
|---|---|---|
| Broflanilide+cyfluthrin | 0.02+0.0016 | 30 |
| Imiprothrin+cyfluthrin | 0.01+0.0016 | 30 |
| Broflanilide+imiprothrin +cyfluthrin | 0.02+0.01+0.0016 | 90 |

[Table 6]

| Active ingredient | Concentration [%] | Expected value [%] of moribund and mortal rates after 420 minutes |
|---|---|---|
| (Broflanilide+imiprothrin) +cyfluthrin | (0.02+0.01)+0.0016 | 75 |
| (Broflanilide+cyfluthrin) +imiprothrin | (0.02+0.0016)+0.01 | 41 |
| Broflanilide +(imiprothrin+cyfluthrin) | 0.02+(0.01+0.0016) | 79 |
| Broflanilide +imiprothrin+cyfluthrin | 0.02+0.01+0.0016 | 75 |

Test Example 4: Control Test against German Cockroaches

(Blattella Germanica)

In a plastic cup (diameter: 12.4 cm, height: 10.2 cm) lined with a filter paper, ten adult German cockroaches (Blattella germanica) (five males and five females each) were released, and the plastic cup was placed in the center of the bottom of a box-shaped chamber (46 cm $\times$ 46 cm $\times$ 70 cm in height). From the height of 60 cm, 1.5 mL of each of formulations prepared by dissolving a single agent of any one of nicofluprole, imiprothrin and deltamethrin, or a mixed agent of two or more thereof in a mixture of isopropyl alcohol and Isopar M at a mixing ratio of 1:9 was sprayed under a spray pressure of 0.041 MPa. After a lapse of 45 minutes from spraying, the number of dead and moribund individuals was examined, and moribund and mortal rates (%) were determined by the above equation 3. The test was performed through two replicates. Dead individuals are completely immobile individuals, and moribund individuals are individuals who cannot get up when turned on their backs. The results are shown in Table 7. The expected value obtained by the Colby's calculation equation is shown in Table 8.

[Table 7]

| Active ingredient | Concentration [%] | Moribund and mortal rates [%] after 45 minutes |
|---|---|---|
| Nicofluprole | 0.01 | 0 |
| Imiprothrin | 0.01 | 65 |
| Deltamethrin | 0.0002 | 0 |
| Nicofluprole+imiprothrin | 0.01+0.01 | 75 |
| Nicofluprole+deltamethrin | 0.01+0.0002 | 0 |
| Imiprothrin+deltamethrin | 0.01+0.0002 | 85 |
| Nicofluprole+imiprothrin +deltamethrin | 0.01+0.01+0.0002 | 90 |

[Table 8]

| Active ingredient | Concentration [%] | Expected value [%] of moribund and mortal rates after 45 minutes |
|---|---|---|
| (Nicofluprole+imiprothrin) +deltamethrin | (0.01+0.01)+0.0002 | 75 |
| (Nicofluprole+deltamethrin) +imiprothrin | (0.01+0.0002)+0.01 | 65 |

(continued)

| Active ingredient | Concentration [%] | Expected value [%] of moribund and mortal rates after 45 minutes |
|---|---|---|
| Nicofluprole +(imiprothrin+deltamethrin) | 0.01+(0.01+0.0002) | 85 |
| Nicofluprole+imiprothrin +deltamethrin | 0.01+0.01+0.0002 | 65 |

Test Example 5: Control Test against German Cockroaches

(Blattella Germanica)

In a plastic cup (diameter: 12.4 cm, height: 10.2 cm) lined with a filter paper, ten adult German cockroaches (Blattella germanica) (five males and five females each) or eleven adult German cockroaches were released, and the plastic cup was placed in the center of the bottom of a box-shaped chamber (46 cm × 46 cm × 70 cm in height). From the height of 60 cm, 1.5 mL of each of formulations prepared by dissolving a single agent of any one of nicofluprole, imiprothrin and cyfluthrin, or a mixed agent of two or more thereof in a mixture of isopropyl alcohol and Isopar M at a mixing ratio of 1:9 was sprayed under a spray pressure of 0.041 MPa. After a lapse of 45 minutes from spraying, the number of dead and moribund individuals was examined, and moribund and mortal rates (%) were determined by the above equation 3. The test was performed through two replicates. Dead individuals are completely immobile individuals, and moribund individuals are individuals who cannot get up when turned on their backs. The results are shown in Table 9. The expected value obtained by the Colby's calculation equation is shown in Table 10.

[Table 9]

| Active ingredient | Concentration [%] | Moribund and mortal rates [%] after 45 minutes |
|---|---|---|
| Nicofluprole | 0.01 | 0 |
| Imiprothrin | 0.01 | 65 |
| Cyfluthrin | 0.0002 | 0 |
| Nicofluprole+imiprothrin | 0.01+0.01 | 75 |
| Nicofluprole+cyfluthrin | 0.01+0.0002 | 0 |
| Imiprothrin+cyfluthrin | 0.01+0.0002 | 62 |
| Nicofluprole+imiprothrin +cyfluthrin | 0.01+0.01+0.0002 | 95 |

[Table 10]

| Active ingredient | Concentration [%] | Expected value [%] of moribund and mortal rates after 45 minutes |
|---|---|---|
| (Nicofluprole+imiprothrin) +cyfluthrin | (0.01+0.01)+0.0002 | 75 |
| (Nicofluprole+cyfluthrin) +imiprothrin | (0.01+0.0002)+0.01 | 65 |
| Nicofluprole +(imiprothrin+cyfluthrin) | 0.01+(0.01+0.0002) | 62 |
| Nicofluprole+imiprothrin +cyfluthrin | 0.01+0.01+0.0002 | 65 |

Test Example 6: Control Test against German Cockroaches

(Blattella Germanica)

In a plastic cup (diameter: 12.4 cm, height: 10.2 cm) lined with a filter paper, ten adult German cockroaches (Blattella germanica) (five males and five females each) were released, and the plastic cup was placed in the center of the bottom of a box-shaped chamber (46 cm × 46 cm × 70 cm in height). From the height of 60 cm, 1.5 mL of each of formulations prepared by dissolving a single agent of any one of isocycloseram, imiprothrin and lambda-cyhalothrin, or a mixed agent of two or more thereof in a mixture of isopropyl alcohol and Isopar M at a mixing ratio of 1:9 was sprayed under a spray pressure of 0.041 MPa. After a lapse of 60 minutes from spraying, the number of dead and moribund individuals was examined, and moribund and mortal rates (%) were determined by the above equation 3. The test was performed through two replicates. Dead individuals are completely immobile individuals, and moribund individuals are individuals who cannot get up when turned on their backs. The results are shown in Table 11. The expected value obtained by the Colby's calculation equation is shown in Table 12.

[Table 11]

| Active ingredient | Concentration [%] | Moribund and mortal rates [%] after 60 minutes |
|---|---|---|
| Isocycloseram | 0.05 | 5 |
| Imiprothrin | 0.01 | 25 |
| Lambda-cyhalothrin | 0.0025 | 45 |
| Isocycloseram+imiprothrin | 0.05+0.01 | 75 |
| Isocycloseram +lambda-cyhalothrin | 0.05+0.0025 | 65 |
| Imiprothrin +lambda-cyhalothrin | 0.01+0.0025 | 90 |
| Isocycloseram+imiprothrin +lambda-cyhalothrin | 0.05+0.01+0.0025 | 100 |

[Table 12]

| Active ingredient | Concentration [%] | Expected value [%] of moribund and mortal rates after 60 minutes |
|---|---|---|
| (Isocycloseram+imiprothrin) +lambda-cyhalothrin | (0.05+0.01)+0.0025 | 86 |
| (Isocycloseram+lambda-cyhalothrin)+imiprothrin | (0.05+0.0025)+0.01 | 74 |
| Isocycloseram+(imiprothrin +lambda-cyhalothrin) | 0.05+(0.01+0.0025) | 91 |
| Isocycloseram+imiprothrin +lambda-cyhalothrin | 0.05+0.01+0.0025 | 61 |

Test Example 7: Control Test against German Cockroaches

(Blattella Germanica)

In a plastic cup (diameter: 12.4 cm, height: 10.2 cm) lined with a filter paper, ten adult German cockroaches (Blattella germanica) (five males and five females each) were released, and the plastic cup was placed in the center of the bottom of a box-shaped chamber (46 cm × 46 cm × 70 cm in height). From the height of 60 cm, 1.5 mL of each of formulations prepared by dissolving a single agent of any one of isocycloseram, imiprothrin and cypermethrin, or a mixed agent of two or more thereof in a mixture of isopropyl alcohol and Isopar M at a mixing ratio of 1:9 was sprayed under a spray pressure of 0.041 MPa. After a lapse of 120 minutes from spraying, the number of dead and moribund individuals was examined, and moribund and mortal rates (%) were determined by the above equation 3. The test was performed through two replicates. Dead individuals are completely immobile individuals, and moribund individuals are individuals who cannot get up when turned on their backs. The results are shown in Table 13. The expected value obtained by the Colby's calculation equation is shown in Table 14.

[Table 13]

| Active ingredient | Concentration [%] | Moribund and mortal rates [%] after 120 minutes |
|---|---|---|
| Isocycloseram | 0.05 | 10 |
| Imiprothrin | 0.01 | 5 |
| Cypermethrin | 0.01 | 50 |
| Isocycloseram+imiprothrin | 0.05+0.01 | 60 |
| Isocycloseram+cypermethrin | 0.05+0.01 | 25 |

(continued)

| Active ingredient | Concentration [%] | Moribund and mortal rates [%] after 120 minutes |
|---|---|---|
| Imiprothrin+cypermethrin | 0.01+0.01 | 75 |
| Isocycloseram+imiprothrin +cypermethrin | 0.05+0.01+0.01 | 85 |

[Table 14]

| Active ingredient | Concentration [%] | Expected value [%] of moribund and mortal rates after 120 minutes |
|---|---|---|
| (Isocycloseram+imiprothrin) +cypermethrin | (0.05+0.01)+0.01 | 80 |
| (Isocycloseram+cypermethrin) +imiprothrin | (0.05+0.01)+0.01 | 29 |
| Isocycloseram +(imiprothrin+cypermethrin) | 0.05+(0.01+0.01) | 78 |
| Isocycloseram+imiprothrin +cypermethrin | 0.05+0.01+0.01 | 57 |

Test Example 8: Control Test against German Cockroaches

(Blattella Germanica)

In a plastic cup (diameter: 12.4 cm, height: 10.2 cm) lined with a filter paper, ten adult German cockroaches (Blattella germanica) (five males and five females each) were released, and the plastic cup was placed in the center of the bottom of a box-shaped chamber (46 cm $\times$ 46 cm $\times$ 70 cm in height). From the height of 60 cm, 1.5 mL of each of formulations prepared by dissolving a single agent of any one of nicofluprole, imiprothrin and phenothrin, or a mixed agent of two or more thereof in a mixture of isopropyl alcohol and Isopar M at a mixing ratio of 1:9 was sprayed under a spray pressure of 0.041 MPa. After a lapse of 45 minutes from spraying, the number of dead and moribund individuals was examined, and moribund and mortal rates (%) were determined by the above equation 3. The test was performed through two replicates. Dead individuals are completely immobile individuals, and moribund individuals are individuals who cannot get up when turned on their backs. The results are shown in Table 15. The expected value obtained by the Colby's calculation equation is shown in Table 16.

[Table 15]

| Active ingredient | Concentration [%] | Moribund and mortal rates [%] after 45 minutes |
|---|---|---|
| Nicofluprole | 0.01 | 0 |
| Imiprothrin | 0.01 | 65 |
| Phenothrin | 0.1 | 5 |
| Nicofluprole+imiprothrin | 0.01+0.01 | 75 |
| Nicofluprole+phenothrin | 0.01+0.1 | 0 |
| Imiprothrin+phenothrin | 0.01+0.1 | |
| Nicofluprole+imiprothrin +phenothrin | 0.01+0.01+0.1 | 95 |

[Table 16]

| Active ingredient | Concentration [%] | Expected value [%] of moribund and mortal rates after 45 minutes |
|---|---|---|
| (Nicofluprole+imiprothrin) +phenothrin | (0.01+0.01)+0.1 | 76 |
| (Nicofluprole+phenothrin) +imiprothrin | (0.01+0.1)+0.01 | 65 |
| Nicofluprole +(imiprothrin+phenothrin) | 0.01+(0.01+0.1) | 85 |

(continued)

| Active ingredient | Concentration [%] | Expected value [%] of moribund and mortal rates after 45 minutes |
|---|---|---|
| Nicofluprole+imiprothrin +phenothrin | 0.01+0.01+0.1 | 67 |

Test Example 9: Control Test against German Cockroaches

(Blattella Germanica)

In a plastic cup (diameter: 12.4 cm, height: 10.2 cm) lined with a filter paper, ten adult German cockroaches (Blattella germanica) (five males and five females each) were released, and the plastic cup was placed in the center of the bottom of a box-shaped chamber (46 cm × 46 cm × 70 cm in height). From the height of 60 cm, 1.5 mL of each of formulations prepared by dissolving a single agent of any one of broflanilide, imiprothrin and permethrin, or a mixed agent of two or more thereof in a mixture of isopropyl alcohol and Isopar M at a mixing ratio of 1:9 was sprayed under a spray pressure of 0.041 MPa. After a lapse of 420 minutes from spraying, the number of dead and moribund individuals was examined, and moribund and mortal rates (%) were determined by the above equation 3. The test was performed through two replicates. Dead individuals are completely immobile individuals, and moribund individuals are individuals who cannot get up when turned on their backs. The results are shown in Table 17. The expected value obtained by the Colby's calculation equation is shown in Table 18.

[Table 17]

| Active ingredient | Concentration [%] | Moribund and mortal rates [%] after 420 minutes |
|---|---|---|
| Broflanilide | 0.02 | 70 |
| Imiprothrin | 0.01 | 15 |
| Permethrin | 0.05 | 5 |
| Broflanilide+imiprothrin | 0.02+0.01 | 75 |
| Broflanilide+permethrin | 0.02+0.05 | 25 |
| Imiprothrin+permethrin | 0.01+0.05 | 40 |
| Broflanilide+imiprothrin +permethrin | 0.02+0.01+0.05 | 85 |

[Table 18]

| Active ingredient | Concentration [%] | Expected value [%] of moribund and mortal rates after 420 minutes |
|---|---|---|
| (Broflanilide+imiprothrin) +permethrin | (0.02+0.01)+0.05 | 76 |
| (Broflanilide+permethrin) +imiprothrin | (0.02+0.05)+0.01 | 36 |
| Broflanilide +(imiprothrin+permethrin) | 0.02+(0.01+0.05) | 82 |
| Broflanilide+imiprothrin +permethrin | 0.02+0.01+0.05 | 76 |

Test Example 10: Control Test against German Cockroaches

(Blattella Germanica)

In a plastic cup (diameter: 12.4 cm, height: 10.2 cm) lined with a filter paper, ten adult German cockroaches (Blattella germanica) (five males and five females each) were released, and the plastic cup was placed in the center of the bottom of a box-shaped chamber (46 cm × 46 cm × 70 cm in height). From the height of 60 cm, 1.5 mL of each of formulations prepared by dissolving a single agent of any one of nicofluprole, imiprothrin and permethrin, or a mixed agent of two or more thereof in a mixture of isopropyl alcohol and Isopar M at a mixing ratio of 1:9 was sprayed under a spray pressure of 0.041 MPa. After a lapse of 60 minutes from spraying, the number of dead and moribund individuals was examined, and moribund and mortal rates (%) were determined by the above equation 3. The test was performed through two replicates. Dead individuals are completely immobile individuals, and moribund individuals are individuals who cannot get up when turned on their backs. The results are shown in Table 19. The expected value obtained by the Colby's calculation equation is shown in Table 20.

[Table 19]

| Active ingredient | Concentration [%] | Moribund and mortal rates [%] after 60 minutes |
|---|---|---|
| Nicofluprole | 0.01 | 0 |
| Imiprothrin | 0.01 | 40 |
| Permethrin | 0.05 | 5 |
| Nicofluprole+imiprothrin | 0.01+0.01 | 55 |
| Nicofluprole+permethrin | 0.01+0.05 | 10 |
| Imiprothrin+permethrin | 0.01+0.05 | 75 |
| Nicofluprole+imiprothrin +permethrin | 0.01+0.01+0.05 | 95 |

[Table 20]

| Active ingredient | Concentration [%] | Expected value [%] of moribund and mortal rates after 60 minutes |
|---|---|---|
| (Nicofluprole+imiprothrin) +permethrin | (0.01+0.01)+0.05 | 57 |
| (Nicofluprole+permethrin) +imiprothrin | (0.01+0.05)+0.01 | 46 |
| Nicofluprole +(imiprothrin+permethrin) | 0.01+(0.01+0.05) | 75 |
| Nicofluprole+imiprothrin +permethrin | 0.01+0.01+0.05 | 43 |

Test Example 11: Control Test against German Cockroaches

(Blattella Germanica)

In a plastic cup (diameter: 12.4 cm, height: 10.2 cm) lined with a filter paper, ten adult German cockroaches (Blattella germanica) (five males and five females each) were released, and the plastic cup was placed in the center of the bottom of a box-shaped chamber (46 cm × 46 cm × 70 cm in height). From the height of 60 cm, 1.5 mL of each of formulations prepared by dissolving a single agent of any one of isocycloseram, imiprothrin and permethrin, or a mixed agent of two or more thereof in a mixture of isopropyl alcohol and Isopar M at a mixing ratio of 1:9 was sprayed under a spray pressure of 0.041 MPa. After a lapse of 120 minutes from spraying, the number of dead and moribund individuals was examined, and moribund and mortal rates (%) were determined by the above equation 3. The test was performed through two replicates. Dead individuals are completely immobile individuals, and moribund individuals are individuals who cannot get up when turned on their backs. The results are shown in Table 21. The expected value obtained by the Colby's calculation equation is shown in Table 22.

[Table 21]

| Active ingredient | Concentration [%] | Moribund and mortal rates [%] after 120 minutes |
|---|---|---|
| Isocycloseram | 0.01 | 5 |
| Imiprothrin | 0.01 | 15 |
| Permethrin | 0.05 | 5 |
| Isocycloseram+imiprothrin | 0.01+0.01 | 50 |
| Isocycloseram+permethrin | 0.01+0.05 | 10 |
| Imiprothrin+permethrin | 0.01+0.05 | 50 |

(continued)

| Active ingredient | Concentration [%] | Moribund and mortal rates [%] after 120 minutes |
|---|---|---|
| Isocycloseram+imiprothrin +permethrin | 0.01+0.01+0.05 | 70 |

[Table 22]

| Active ingredient | Concentration [%] | Expected value [%] of moribund and mortal rates after 120 minutes [%] |
|---|---|---|
| (Isocycloseram+imiprothrin) +permethrin | (0.01+0.01)+0.05 | 53 |
| (Isocycloseram+permethrin) +imiprothrin | (0.01+0.05)+0.01 | 24 |
| Isocycloseram +(imiprothrin+permethrin) | 0.01+(0.01+0.05) | 53 |
| Isocycloseram+imiprothrin +permethrin | 0.01+0.01+0.05 | 23 |

The above Test Examples revealed that the inventive composition is more effective in control effect against pests than the expected value to be expected from the results obtained when the respective components of the composition are used alone or when any two components are used after being mixed.

[Industrial Applicability]

The pest control composition of the present invention is expected to exert excellent pest control effect.

**Claims**

1.  A pest control composition comprising at least one or more pest control compounds selected from Group (A), at least one or more pest control compounds selected from Group (B) and at least one or more pest control compounds selected from Group (C) in a weight ratio of 1:1000:1000 to 1:0.001:0.001:

    Group (A): Group consisting of broflanilide, nicofluprole, fluxametamide and isocycloseram;
    Group (B): Group consisting of imiprothrin and tetramethrin; and
    Group (C): Group consisting of permethrin, cypermethrin, phenothrin, cyphenothrin, cyfluthrin, deltamethrin and cyhalothrin.

2.  A method for controlling pests, which comprises applying the effective amount of the pest control composition according to claim 1 to pests, or a habitat thereof, or a place where the appearance thereof is expected.

## INTERNATIONAL SEARCH REPORT

| International application No. |
| --- |
| **PCT/JP2022/025945** |

### A. CLASSIFICATION OF SUBJECT MATTER

*A01N 37/46*(2006.01)i; *A01P 7/04*(2006.01)i; *A01N 53/04*(2006.01)i; *A01N 53/08*(2006.01)i; *A01N 43/56*(2006.01)i
FI:   A01N37/46; A01P7/04; A01N53/04 520; A01N53/08 125; A01N43/56 D

According to International Patent Classification (IPC) or to both national classification and IPC

### B. FIELDS SEARCHED

Minimum documentation searched (classification system followed by classification symbols)

A01N37/46; A01P7/04; A01N53/04; A01N53/08; A01N43/56

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JMEDPlus/JST7580 (JDreamIII); CAplus/REGISTRY (STN)

### C. DOCUMENTS CONSIDERED TO BE RELEVANT

| Category* | Citation of document, with indication, where appropriate, of the relevant passages | Relevant to claim No. |
| --- | --- | --- |
| X | WO 2017/122687 A1 (MITSUI CHEMICALS AGRO INC) 20 July 2017 (2017-07-20) claims, paragraph [0054], examples | 1-2 |
| X | WO 2017/061483 A1 (NIPPON SODA CO., LTD.) 13 April 2017 (2017-04-13) claims, paragraph [0058] | 1-2 |
| X | WO 2016/174052 A1 (BAYER ANIMAL HEALTH GMBH) 03 November 2016 (2016-11-03) claims, p. 65, line 21 to p. 66, line 34 | 1-2 |
| X | WO 2019/230621 A1 (NISSAN CHEMICAL CORPORATION) 05 December 2019 (2019-12-05) claims, paragraph [0014] | 1-2 |
| X | JP 2020-121955 A (NISSAN CHEMICAL CORPORATION) 13 August 2020 (2020-08-13) claims, paragraphs [0019], [0026] | 1-2 |
| X | JP 2020-186191 A (NIHON NOHYAKU CO LTD) 19 November 2020 (2020-11-19) claims, paragraph [0246] | 1-2 |

☑ Further documents are listed in the continuation of Box C.      ☑ See patent family annex.

| | |
| --- | --- |
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **02 September 2022** | **20 September 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

<div align="center">

**INTERNATIONAL SEARCH REPORT**

</div>

| | International application No. |
|---|---|
| | **PCT/JP2022/025945** |

## C. DOCUMENTS CONSIDERED TO BE RELEVANT

| Category* | Citation of document, with indication, where appropriate, of the relevant passages | Relevant to claim No. |
|---|---|---|
| Y | WO 2020/012312 A1 (UPL LTD) 16 January 2020 (2020-01-16)<br>claims, table 1 | 1-2 |
| Y | WO 2020/126649 A1 (BAYER AKTIENGESELLSCHAFT) 25 June 2020 (2020-06-25)<br>claims, p. 4, lines 24-29 | 1-2 |
| Y | JP 2002-47114 A (PRODUITS BERGER) 12 February 2002 (2002-02-12)<br>claims, examples | 1-2 |
| Y | JP 2008-515869 A (ENVIROQUEST GROUP LTD) 15 May 2008 (2008-05-15)<br>claims, examples | 1-2 |
| Y | JP 2017-178793 A (SC ENV SCIENCE CO LTD) 05 October 2017 (2017-10-05)<br>claims, paragraph [0010], examples | 1-2 |
| Y | JP 2009-509947 A (BAYER CROPSCIENCE AG) 12 March 2009 (2009-03-12)<br>paragraph [0010] | 1-2 |
| P, X | JP 2021-102661 A (SUMITOMO CHEMICAL CO) 15 July 2021 (2021-07-15)<br>paragraph [0248] | 1-2 |

## INTERNATIONAL SEARCH REPORT
### Information on patent family members

| International application No. |
| --- |
| **PCT/JP2022/025945** |

| Patent document cited in search report | | | Publication date (day/month/year) | Patent family member(s) | | | Publication date (day/month/year) |
| --- | --- | --- | --- | --- | --- | --- | --- |
| WO | 2017/122687 | A1 | 20 July 2017 | BR | 112018014039 | A | |
| WO | 2017/061483 | A1 | 13 April 2017 | US | 2018/0271093 | A1 | |
| | | | | claims, p. 51, lines 21-37 | | | |
| | | | | EP | 3360415 | A1 | |
| | | | | AU | 2016334757 | A | |
| | | | | CA | 3000622 | A | |
| | | | | CN | 108135171 | A | |
| | | | | KR | 10-2018-0064404 | A | |
| | | | | MX | 2018003504 | A | |
| | | | | BR | 112018006292 | A | |
| | | | | RU | 2018111201 | A | |
| | | | | TW | 201717760 | A | |
| | | | | PL | 3360415 | T | |
| | | | | ES | 2817081 | T | |
| WO | 2016/174052 | A1 | 03 November 2016 | UY | 36652 | A | |
| | | | | TW | 201713212 | A | |
| | | | | AR | 104398 | A | |
| WO | 2019/230621 | A1 | 05 December 2019 | KR | 10-2021-0015909 | A | |
| | | | | CN | 112218531 | A | |
| | | | | TW | 202002782 | A | |
| | | | | AR | 115431 | A | |
| JP | 2020-121955 | A | 13 August 2020 | (Family: none) | | | |
| JP | 2020-186191 | A | 19 November 2020 | (Family: none) | | | |
| WO | 2020/012312 | A1 | 16 January 2020 | US | 2021/0127680 | A1 | |
| | | | | BR | 112020026072 | A | |
| WO | 2020/126649 | A1 | 25 June 2020 | JP | 2022-513968 | A | |
| | | | | US | 2021/0378237 | A1 | |
| | | | | EP | 3897132 | A1 | |
| | | | | KR | 10-2021-0104795 | A | |
| | | | | CN | 113365497 | A | |
| | | | | AU | 2019400639 | A | |
| | | | | SG | 11202106552V | A | |
| | | | | BR | 112021010244 | A | |
| | | | | UY | 38518 | A | |
| | | | | TW | 202038718 | A | |
| | | | | AR | 117355 | A | |
| JP | 2002-47114 | A | 12 February 2002 | US | 2002/0019435 | A1 | |
| | | | | claims, examples | | | |
| | | | | EP | 1169920 | A1 | |
| | | | | FR | 2811202 | A | |
| | | | | ES | 2166743 | T | |
| | | | | HK | 1031503 | A | |
| | | | | CA | 2352410 | A | |
| | | | | AT | 268115 | T | |
| | | | | TW | 230583 | B | |
| | | | | KR | 10-2002-0005368 | A | |
| | | | | SG | 112800 | A | |
| | | | | TR | 200200231 | T | |
| | | | | MY | 129213 | A | |

Form PCT/ISA/210 (patent family annex) (January 2015)

**INTERNATIONAL SEARCH REPORT**
**Information on patent family members**

International application No.

**PCT/JP2022/025945**

| Patent document cited in search report | | | Publication date (day/month/year) | Patent family member(s) | | | Publication date (day/month/year) |
|---|---|---|---|---|---|---|---|
| JP | 2008-515869 | A | 15 May 2008 | US | 2008/0096763 | A1 | |
| | | | | claims, examples | | | |
| | | | | GB | 2433890 | A | |
| | | | | WO | 2006/038019 | A1 | |
| | | | | EP | 1809102 | A1 | |
| | | | | AU | 2005291009 | A | |
| | | | | MX | 2007004213 | A | |
| | | | | ES | 2395637 | T | |
| JP | 2017-178793 | A | 05 October 2017 | (Family: none) | | | |
| JP | 2009-509947 | A | 12 March 2009 | US | 2009/0306146 | A1 | |
| | | | | paragraph [0010] | | | |
| | | | | WO | 2007/033779 | A2 | |
| | | | | EP | 1928233 | A1 | |
| | | | | DE | 102005044826 | A | |
| | | | | AR | 55440 | A | |
| | | | | KR | 10-2008-0047465 | A | |
| | | | | CA | 2622812 | A | |
| | | | | IL | 190200 | D | |
| | | | | CN | 101384169 | A | |
| | | | | ZA | 200802479 | A | |
| | | | | AU | 2006294142 | A | |
| | | | | TW | 200803725 | A | |
| JP | 2021-102661 | A | 15 July 2021 | (Family: none) | | | |

Form PCT/ISA/210 (patent family annex) (January 2015)

28

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015067646 A

**Non-patent literature cited in the description**

- The Pesticide Manual. BCPC